# FASCICULE DE BREVET EUROPEEN

(11) **EP 0 532 378 B1**
(45) Date de publication et mention de la délivrance du brevet: **11.06.1997**
(21) Numéro de dépôt: 92402324.5
(22) Date de dépôt: 21.08.1992
(51) Int. Cl.: B60R 22/02, B60R 22/24

(54) **Dispositif de retenue pour un passager occupant la place centrale arrière d'un véhicule automobile**
Rückhaltevorrichtung für einen, auf dem mittleren Rücksitz eines Fahrzeuges sitzenden, Insassen
Restraining device for the back-seat middle passenger of a vehicle

(30) Priorité: 13.09.1991 FR 9111337
(43) Date de publication de la demande: 17.03.1993
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, F-95110 Sannois (FR)
(74) Mandataire: Thinat, Michel

(56) Documents cités:
- DE-A- 2 813 888
- PATENT ABSTRACTS OF JAPAN vol. 12, no. 378 (M-751)(3225) 11 Octobre 1988 & JP-A-63 130 450 (MAZDA MOTOR CORP. 2 Juin 1988

## Description

La présente invention concerne un dispositif de retenue pour un passager occupant la place centrale arrière d'un véhicule automobile.

On connaît un tel dispositif du type comprenant une ceinture de sécurité à brin thoracique dont l'extrémité supérieure est fixée sur une traverse intégrée à la partie supérieure du dossier du siège du passager et verrouillée latéralement sur les côtés du véhicule. Cependant, cette solution connue n'est pas compatible avec des assises de sièges séparées réglables ou rabattables individuellement.

On connaît également un dispositif de retenue à ceinture de sécurité dans lequel le brin thoracique de la ceinture est fixé au pavillon du véhicule. Dans ce cas, un enrouleur est soit fixé directement au droit d'une épaule du passager central au niveau de la traverse arrière d'entrée du volet du véhicule, soit est placé dans la custode du véhicule, la ceinture courant transversalement jusqu'à un renvoi situé au droit de l'épaule, sur la traverse arrière. Dans ces deux cas, la ceinture descend verticalement sur le côté de la tête du passager central, occasionnant une gêne à la fois au passager central et au passager latéral assis de ce côté. De plus, ce type de ceinture constitue un risque de traumatisme aux vertèbres cervicales, en cas de choc transversal particulièrement violent, pour le passager central et le passager latéral. Enfin, la ceinture ainsi que les organes de fixation en partie supérieure constituent une gêne à la visibilité du conducteur du véhicule.

Il est connu également du document DE-A-2 813 888 un dispositif de retenue, qui dans une variante comporte une ceinture de sécurité à trois points d'ancrage définissant en position bouclée de la ceinture un brin ventral et deux brins thoraciques venant se réunir par une liaison en Y à un point d'ancrage fixé sur ou au droit de tablette du véhicule sensiblement en sa partie médiane.

Ce type de ceinture présente un certain nombre d'inconvénients. S'il est fixé sur la tablette, le point d'ancrage n'est pas suffisamment résistant en cas de choc frontal. S'il est fixé à la structure centrale arrière, alors il gêne l'ouverture du volet du véhicule, sauf pour ceux ayant une vitre arrière fixe avec une traverse fixe. Enfin, ce type de ceinture n'est pas simple d'emploi pour le passager arrière qui doit insérer sa tête entre les deux brins thoraciques et il gêne la dépose d'objets sur la tablette arrière.

La présente invention a pour but d'éliminer les inconvénients ci-dessus des dispositifs connus en proposant un dispositif de retenue pour un passager occupant la place arrière d'un véhicule automobile comprenant les caractéristiques énoncées dans la revendication 1.

Avantageusement, le brin thoracique de la ceinture passe dans un renvoi fixé latéralement sur la custode du véhicule et descend ensuite sensiblement verticalement jusqu'à l'enrouleur qui est encastré dans un côté de la caisse du véhicule.

Selon encore une autre caractéristique préférée de l'invention, la ceinture passe au travers d'un guide fixé au sommet du dossier du siège du passager central et, de préférence, le guide est réalisé en un matériau frangible se rompant lors d'un choc transversal relativement violent.

Selon toujours une autre caractéristique préférée de l'invention, après déverrouillage uniquement du pêne coulissant de l'organe de verrouillage du pédoncule correspondant, l'enrouleur enroule une certaine longueur de ceinture jusqu'à ce que celle-ci occupe une position rangée sensiblement verticale le long du dossier précité depuis le guide précité.

Lorsque le véhicule est du type comportant une tablette pivotante de camouflage du coffre arrière de celui-ci prolongée bilatéralement respectivement par deux parties fixes solidaires de la caisse du véhicule, la ceinture est renvoyée vers l'enrouleur en passant à travers une découpe latérale réalisée dans la tablette ou à travers un trou pratiqué dans la partie fixe de tablette située au-dessus de l'enrouleur et passe au-dessus de la tablette de telle sorte qu'un mouvement de pivotement de la tablette vers sa position relevée provoque un déroulement supplémentaire de ceinture depuis l'enrouleur.

Avantageusement, après déverrouillage du pêne en bout de ceinture de l'organe de verrouillage du pédoncule correspondant, la ceinture est enroulée en grande partie dans l'enrouleur et occupe une position rangée inactive sur la partie fixe de tablette correspondante en étant logée dans un réceptacle de préférence moulé dans ladite partie fixe.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
La figure 1 est une vue en élévation transversale de l'arrière d'un véhicule automobile comportant le dispositif de retenue conforme à l'invention.
La figure 2 est une vue de dessus suivant la flèche II de la figure 1.
La figure 3 est une vue de face suivant la flèche III de la figure 1.
La figure 4 est une vue en perspective de la ceinture de sécurité du dispositif de l'invention.

En se reportant aux figures, la référence 1 désigne la partie arrière d'un véhicule automobile comprenant un volet pivotant 2 d'accès au coffre arrière 3 du véhicule et des assises 4 ayant une certaine fonctionnalité, c'est-dire soit qu'elles sont réglables longitudinalement au véhicule, soit qu'elles peuvent se rabattre afin d'augmenter le volume du coffre 3. Les assises 4 peuvent être monobloc du type banquette ou scindées en deux parties respectivement 4A et 4B de façon dissymétrique comme réprésenté de façon à transporter deux personnes à l'arrière sur la partie d'assise 4A tout en ayant la possibilité d'augmenter le volume du coffre 3 par repliage ou dégagement vers l'avant de la partie d'assise 4B.

Le passager central arrière est retenu par une ceinture 5 à trois points d'ancrage enroulée sur un enrouleur fixe 6, se terminant par un pêne 7 et comportant un second pêne 8 pouvant coulisser sur la ceinture 5. Lorsque la ceinture est bouclée, le passager central arrière est retenu par un brin thoracique 5a et un brin ventral 5b de la ceinture 5.

Selon l'invention, le brin thoracique 5a passe sur une épaule du passager central, par exemple l'épaule droite comme représenté et se prolonge ensuite vers l'arrière du véhicule par un brin sensiblement horizontal 5c et disposé dans la partie arrière du véhicule de façon oblique par rapport à l'axe longitudinal X-X′ du véhicule. Le brin 5c passe dans un renvoi 9 fixé latéralement à la custode 10 du véhicule, du côté droit de celui-ci. Le brin 5c descend ensuite sensiblement verticalement du renvoi 9 jusqu'à l'enrouleur 6 qui est avantageusement encastré dans le côté droit de la caisse du véhicule.

Le véhicule représenté est du type où le coffre 3 est camouflé par une tablette supérieure 11 pouvant pivoter vers une position relevée lors de l'ouverture du volet 2 par l'intermédiaire de deux cordons latéraux (non représentés). A cet effet, la tablette 11 peut comporter, comme cela est connu en soi, deux axes coaxiaux de pivotement 12 disposés à l'avant de la tablette 11 transversalement à celle-ci et s'étendant extérieurement de façon à s'engager respectivement dans deux supports de tourillonnage (non représentés) solidaires de deux parties fixes latérales et horizontales 13a, 13b prolongeant bilatéralement la tablette 11 et sur lesquelles cette dernière s'appuie en position de camouflage du coffre 3. Les parties 13a et 13b sont solidarisées aux custodes respectives du véhicule.

Pour permettre le passage du brin 5c de ceinture vers l'enrouleur 6, la tablette 11 comporte une découpe latérale 11a. Selon une variante, le passage du brin 5c peut également s'effectuer au travers d'un trou réalisé dans la partie 13a à droite du passager, au-dessus de l'enrouleur 6.

La ceinture 5 est verrouillée à deux pédoncules 14A et 14B disposés respectivement sur le côté droit et le côté gauche du passager central. Les pédoncules 14A, 14B sont fixés soit directement au plancher 15 du véhicule comme représenté, soit sur l'armature du siège du passager central. Le pêne 7 en bout de ceinture 5 est verrouillé de façon déverrouillable dans un organe de verrouillage ou de déverrouillage 16A fixé à l'extrémité du pédoncule 14A situé du même côté que l'enrouleur 6 tandis que le pêne coulissant 8 est verrouillé de façon déverrouillable à un organe de verrouillage ou de déverrouillage 16B fixé à l'extrémité du pédoncule 14B.

Avantageusement, le brin thoracique 5a de la ceinture 5 passe dans un guide 17 fixé au sommet du dossier de l'assise 4A à droite du passager central, lequel guide n'est soumis à aucun effort en cas de choc avant. Cependant, il est préférable que le guide 17 soit réalisé en un matériau frangible se rompant lors d'un choc transversal relativement violent.

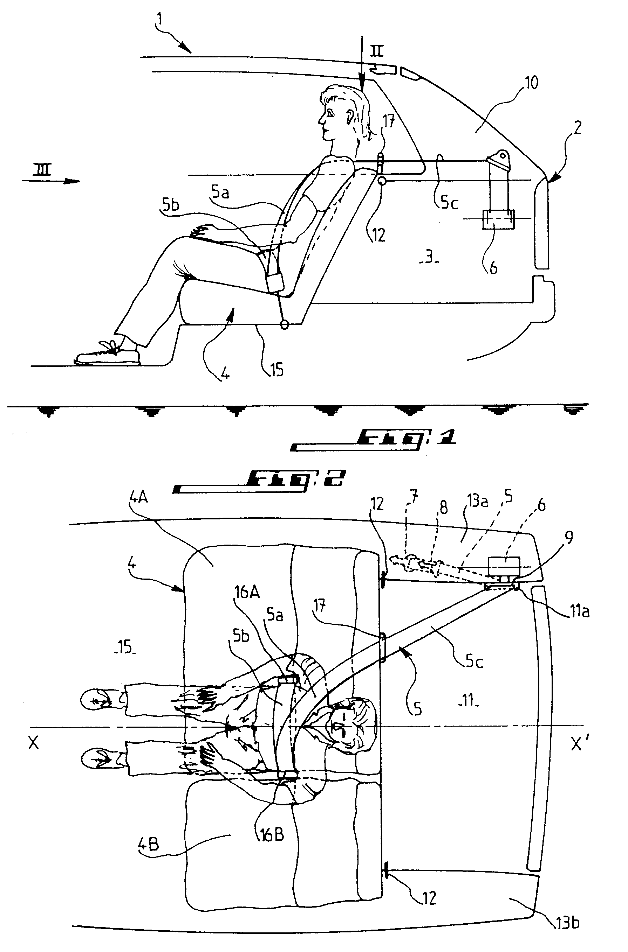

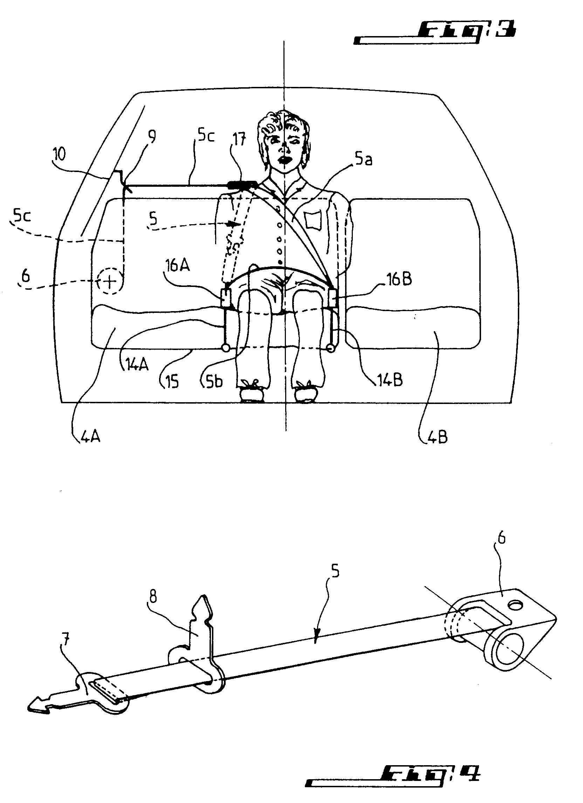

En position bouclée de la ceinture 5 représentée en figure 3, la longueur de ceinture s'étendant entre l'épaule du passager central et le renvoi 9 sur la caisse du véhicule permet au passager central de ne pas être bloqué transversalement par la ceinture 5, ce qui lui permet de se déplacer lors d'un choc transversal violent sans subir de traumatisme au niveau du cou. De plus, l'assise 4B dans le cas où elle est réglable, peut être manoeuvrée longitudinalement sans être gênée par le dispositif de retenue de l'invention qui se trouve en dehors des mouvements de l'assise 4B avec le pédoncule 14B fixé entre l'assise 4A et l'assise 4B et cette dernière, lorsque non occupée, peut être rabattue normalement. De même, le dispositif de retenue de l'invention n'occasionne aucune gêne à l'ouverture du volet arrière 2 et au relevage de la tablette 11 du fait que le mouvement de la tablette 11 vers sa position relevée va tout simplement provoquer un déroulement supplémentaire de ceinture depuis l'enrouleur 6.

Lorsque le pêne coulissant 8 est déverrouillé mais que le pêne d'extrémité 7 reste toujours verrouillé au pédoncule 14A, la ceinture est enroulée en grande partie dans l'enrouleur 6 et occupe une position rangée le long du dossier du passager central sensiblement verticale depuis le guide 17 comme cela est représenté en pointillés à la figure 3.

Le déverrouillage du pêne 7 du pédoncule 14A amène la ceinture à s'enrouler en grande partie sur l'enrouleur 6 en laissant subsister une portion d'extrémité lâche de ceinture qui peut être rangée sur la partie fixe 13a de la tablette 11. Cette portion d'extrémité de ceinture peut être avantageusement logée avec les pênes 7 et 8 dans un réceptacle (non représenté) de préférence moulé dans la partie 13a. En position rangée, la ceinture n'est plus du tout gênante et ne nuit pas à l'esthétique d'ensemble. Cette position rangée autorise bien entendu toute transformation possible des assises arrière y compris de basculement des dossiers pour transformation du véhicule en break.

## Revendications

1. Dispositif de retenue pour un passager occupant la place centrale arrière d'un véhicule automobile, du type comprenant deux pédoncules (14A, 14B) à organes de verrouillage ou de déverrouillage (16A, 16B) disposés de part et d'autre dudit passager central et une ceinture de sécurité (5) à trois points d'ancrage dont un muni d'un enrouleur (6), ladite ceinture étant munie de deux pênes pouvant être verrouillés respectivement aux deux organes de verrouillage ou de déverrouillage des deux pédoncules, et dont un pêne est monté coulissant sur ladite ceinture, définissant ainsi en position bouclée un brin thoracique (5a) et un brin ventral (5b), caractérisé en ce que ladite ceinture est munie d'un pêne fixe en bout et comporte un seul brin thoracique qui passe sur une épaule du passager central et part ensuite vers l'arrière du véhicule de façon sensiblement horizontale et obliquement par rapport à l'axe longitudinal (X-X') du véhicule jusqu'à l'enrouleur fixé à la structure arrière d'un côté du véhicule correspondant à l'épaule de ce passager.

2. Dispositif selon la revendication 1, caractérisé en ce que le brin thoracique (5a) de la ceinture (5) passe dans un renvoi (9) fixé latéralement sur la custode (10) du véhicule et descend ensuite sensiblement verticalement jusqu'à l'enrouleur (6) qui est encastré dans un côté de la caisse du véhicule.

3. Dispositif selon la revendication 1 ou 2, caractérisé en ce que la ceinture (5) passe au travers d'un guide (17) fixé au sommet du dossier de l'assise (4A) du passager central.

4. Dispositif selon la revendication 3, caractérisé en ce que le guide (17) précité est réalisé en un matériau frangible se rompant lors d'un choc transversal relativement violent.

5. Dispositif selon les revendications 1 à 4, caractérisé en ce que, après déverrouillage uniquement du pêne coulissant (8) de l'organe de verrouillage (16B) du pédoncule correspondant (14B), l'enrouleur (6) enroule une certaine longueur de ceinture (5) jusqu'à ce que celle-ci occupe une position rangée sensiblement verticale le long du dossier précité depuis le guide (17).

6. Dispositif selon l'une des revendications précédentes, où le véhicule comporte une tablette pivotante (11) de camouflage du coffre arrière (3) du véhicule prolongée bilatéralement respectivement par deux parties fixes (13a, 13b) solidaires de la caisse du véhicule, caractérisé en ce que la ceinture (5) est renvoyée vers l'enrouleur (6) en passant à travers une découpe latérale (11a) réalisée dans la tablette (11) ou à travers un trou pratiqué dans la partie fixe (13b) de tablette (11) située au-dessus de l'enrouleur (6) et passe au-dessus de la tablette (11) de telle sorte qu'un mouvement de pivotement de la tablette (11) vers sa position relevée provoque un déroulement supplémentaire de ceinture depuis l'enrouleur (6).

7. Dispositif selon les revendications 1 à 6, caractérisé en ce que, après déverrouillage du pêne (7) en bout de ceinture (5) du pédoncule correspondant (14A), la ceinture (5) est enroulée en grande partie dans l'enrouleur (6) et occupe une position rangée inactive sur la partie fixe de tablette (13a) au-dessus de l'enrouleur (6) en étant logée dans un réceptacle de préférence moulé dans ladite partie fixe (13a).

## Claims

1. Restraining device for a passenger occupying the rear central place of an automotive vehicle, of the type comprising two peduncles (14a, 14b) with locking and unlocking members (16a, 16b) disposed on either side of the said central passenger and a safety seat belt (5) with three anchoring points with one of which provided with a retractor (6), the said belt being provided with two latch bolts which may be locked to both locking or unlocking members, respectively, of both peduncles and one latch bolt of which is slidably mounted onto the said belt, thus defining in the fastened position, a thoracic side (5a) and a ventral side (5b), characterized in that the said belt is provided endwise with a stationary latch bolt and comprises one single thoracic side which passes over one shoulder of the central passenger and then leads towards the rear of the vehicle so as to be substantially horizontal and obliquely with respect to the longitudinal axis (X-X') of the vehicle up to the retractor fastened to the rear structure of one side of the vehicle corresponding to the shoulder of this passenger.

2. Device according to claim 1, characterized in that the thoracic side (5a) of the belt (5) passes into a sash guide (9) fastened sidewise upon the back end structure (10) of the vehicle and then extends downwards substantially vertically to the retractor (6) which is set into one side of the body of the vehicle.

3. Device according to claim 1 or 2, characterized in that the belt (5) passes through a guide (17) fastened at the top of the seat backrest of the seating portion (4A) of the central passenger.

4. Device according to claim 3, characterized in that the aforesaid guide (17) is made from a frangible material breaking upon a relatively violent transverse shock.

5. Device according to claims 1 to 4, characterized in that after the unlocking of the sliding latch bolt (8) from the locking member (16B) of the corresponding peduncle (14B), the retractor (6) winds up a certain belt length (5) until the latter occupies a position stowed substantially vertically along the aforesaid seat backrest from the guide (17).

6. Device according to any one of the foregoing claims, wherein the vehicle comprises a pivoting backlight shelf (11) for hiding the rear boot (3) of the vehicle prolonged bilaterally by two stationary portions (13a, 13b), respectively, made fast to the body of the vehicle, characterized in that the belt (5) is guided back towards the retractor (6) by passing through a side cutout (11a) made in the backlight shelf (11) or through a hole formed in the stationary portion (13b) of the backlight shelf (11) located above the retractor (6) and passes above the backlight shelf (11) so that any pivoting movement of the backlight shelf (11) towards its raised position causes an additional unwinding of the belt from the retractor (6).

7. Device according to claims 1 to 6, characterized in that after the unlocking of the latch bolt (7) endwise of the belt (5) from the corresponding peduncle (14A), the belt (5) is wound up to a great part into the retractor (6) and assumes an inoperative stowed position on the stationary part of the backlight shelf (13a) above the retractor (6) while being accommodated in a housing preferably molded within the said stationary part (13a).

## Patentansprüche

1. Rückhaltevorrichtung für einen den hinteren mittleren Platz eines Kraftfahrzeuges einnehmenden Insassen, derjenigen Gattung mit zwei beiderseits des besagten mittleren Insassen angeordneten Stielen (14A, 14B) mit Verriegelungs- bzw. Entriegelungsgliedern (16A, 16B) und einem Sicherheitsgurt (5) mit drei Verankerungspunkten, deren einer mit einem Wickler (6) versehen ist, wobei der besagte Gurt mit zwei mit den beiden Verriegelungs- bzw. Entriegelungsgliedern der beiden Stiele verriegelbaren Riegeln versehen ist, deren eine Riegel an dem besagten Gurt gleitbar angeordnet ist und somit in der zugeschnallten Stellung ein Brusttrumm (5a) und ein Bauchtrumm (5b) bestimmt, dadurch gekennzeichnet, daß der besagte Gurt am Ende mit einem ortsfesten Riegel versehen ist und ein einziges Brusttrumm aufweist, das über eine Schulter des mittleren Insassen führt und dann nach hinten des Fahrzeuges in etwa waagerechter Weise und schräg in bezug auf die Längsachse (X-X') des Fahrzeuges bis zu dem an dem hinteren Aufbau einer der Schulter dieses Insassen entsprechenden Seite des Fahrzeuges befestigten Wickler verläuft.

2. Vorrichtung nach Anspruch 1, dadurch gekennzeichnet, daß das Brusttrumm (5a) des Gurtes (5) durch einen an dem Karosserieteil (10) über dem Hinterrad des Fahrzeuges seitlich befestigten Umlenker (9) führt und dann etwa senkrecht bis zu dem Wickler (6) abwärts führt, der in einer Seite des Kastens des Fahrzeuges eingefaßt ist.

3. Vorrichtung nach Anspruch 1 oder 2, dadurch gekennzeichnet, daß der Gurt (5) durch eine oben an der Rücklehne des Sitzes (4A) des mittleren Insassen befestigte Führung (17) verläuft.

4. Vorrichtung nach Anspruch 3, dadurch gekennzeichnet, daß die vorgenannte Führung (17) aus einem sich während eines verhältnismäßig heftigen Querstoßes brechenden brechbaren Werkstoff hergestellt ist.

5. Vorrichtung nach den Ansprüchen 1 bis 4, dadurch gekennzeichnet, daß, nach Entriegelung lediglich des Gleitriegels (8) von dem Verriegelungsglied (16B) des entsprechenden Stieles (14B), der Wickler (6) eine gewiße Gurtlänge (5) aufwickelt, bis der Gurt eine etwa senkrechte aufgeräumte Stellung entlang der vorgenannten Rücklehne von der Führung (17) ab einnimmt.

6. Vorrichtung nach einem der vorangehenden Ansprüche, bei welcher das Fahrzeug eine schwenkbare Platte (11) zur Abdeckung des eingebauten hinteren Kofferraumes (3) des Fahrzeuges aufweist, welche beiderseits jeweils durch zwei mit dem Kasten des Fahrzeuges fest verbundenen ortsfesten Teilen (13a, 13b) fortgesetzt wird, dadurch gekennzeichnet, daß der Gurt (5) zum Wickler (6) hin umgelenkt wird, indem er durch einen in der Platte (11) gebildeten Seitenausschnitt (11a) oder durch ein in dem oberhalb des Wicklers (6) gelegenen ortsfesten Teil (13b) der Platte (11) gebildetes Loch hindurch führt und über der Platte (11) verläuft, derart, daß eine Schwenkbewegung der Platte (11) zu ihrer hochgeschwengten Stellung hin ein zusätzliches Abwickeln des Gurtes von dem Wickler (6) verursacht.

7. Vorrichtung nach den Ansprüchen 1 bis 6, dadurch gekennzeichnet, daß nach Entriegelung des Riegels (7) am Ende des Gurtes (5) von dem entsprechenden Stiel (14A), der Gurt (5) zum größten Teil in dem Wickler (6) aufgewickelt wird und eine abgestellte unwirksame Lage an dem ortsfesten Teil der Platte (13a) oberhalb des Wicklers (6) einnimmt, indem er in einem vorzugsweise in dem besagten ortsfesten Teil (13a) angeformten Gehäuse untergebracht ist.
